# EUROPEAN PATENT SPECIFICATION

(11) **EP 3 282 386 B1**
(45) Date of publication and mention of the grant of the patent: **11.11.2020**
(21) Application number: 17182367.7
(22) Date of filing: 20.07.2017
(51) Int. Cl.: G06K 7/10

(54) **READING APPARATUS**
LESEVORRICHTUNG
APPAREIL DE LECTURE

(30) Priority: 22.07.2016 JP 2016144411
(43) Date of publication of application: 14.02.2018
(73) Proprietor: Toshiba TEC Kabushiki Kaisha, Tokyo 141-8562 (JP)
(72) Inventor: SAKURAI, Wataru, Shinagawa-ku,, Tokyo 141-8562 (JP)
(74) Representative: Bandpay & Greuter

(56) References cited:
- EP-A1- 2 975 551
- WO-A1-2006/000016
- US-A1- 2014 138 440
- US-A1- 2015 028 997

## Description

### FIELD

Embodiments described herein relate generally to a reading apparatus.

### BACKGROUND

In the related art, there was a reading apparatus which reads information stored in an RFID tag (wireless tag), and the apparatus was used in various uses and forms. For example, in the related art, a reading apparatus in which an RFID tag is received in a storage container of which a side wall is covered by a radio wave absorbing material in order to read only the RFID tag information which is received in the storage container, and information is read through an antenna provided at a mounting table on which the storage container is mounted was proposed. Meanwhile, in the above described configuration in the related art, when a mounting position of the storage container is deviated from the antenna, since a radio wave from the antenna extends to the periphery of the storage container, there is a possibility that an RFID tag in the outside of the storage container may response to the radio wave. Therefore, a configuration in which the antenna (mounting table) is received in to a housing (storage container), and a range to which a radio wave of the antenna extends is limited to the inside of the housing, by opening or closing the housing using a door, or the like, is taken into consideration. In the configuration, it is possible to use a detecting unit in a control of a start and stop of reading, by providing the detecting unit which detects opening or closing of the door. In general, the detecting unit is provided at a portion on a housing which is in contact with, or is close to the door in a closed state, when a mechanical switch or an optical sensor is used, for example.
However, since a hole for detecting opening or closing, or the like, is provided at the portion on the housing at which the above described detecting unit is provided in general, there was a possibility that a radio wave in the housing may be leaked to the outside from the portion.

EP 2975551 discloses a reading apparatus comprising a box, an opening/closing cover, an opening/closing sensor, and a RFID antenna.

WO 2006/00016 discloses a reading apparatus comprising a base, a door, a sensor, and an antenna.

US 2015/0028997 discloses a mobile RFID container comprising a main body, a door, a sensor, and a RFID antenna mechanism.

US 2014/0138440 discloses a RFID cabinet system configured to start the scanning when the locking doors are closed.
To solve the above-cited problem, there is provided a reading apparatus according to claim 1, for reading information from an RFID tag which is attached to a commodity, the apparatus comprising: a housing which includes an opening portion as an entrance of the commodity, and a storage chamber for receiving the commodity in the inside thereof; a door which opens or closed the opening portion; a detecting unit which is provided at a portion in the housing which is in contact with, or is close to the door in a closed state of the door, and detects opening or closing of the door; an antenna which is provided inside the housing, and reads information from the RFID tag of the commodity which is received in the storage chamber in the closed state of the door; and a shielding portion which shields a radio wave which is leaked from the inside to the outside of the housing at a portion at which the detecting unit is provided; wherein the shielding portion is a structure body which is formed of a radio wave reflecting material or a radio wave absorbing material, characterized in that a first hole for detecting opening or closing of the door using the detecting unit is provided at a portion of the housing which faces the detecting unit, and the shielding portion is arranged so as to cover the detecting unit and the first hole to shield a radiowave which is leaked to the outside from the inside of the housing.
Preferably, the cover portion is formed in a box shape.
Preferably, the cover portion is formed in a dome shape.
Preferably, the detecting unit comprises a mechanical switch and a projection portion.
In this case, the switch is provided inside the structure body and is connected to the antenna using a wire harness, and the projection portion is formed on the housing side of a wall surface of the door in a manner to face the switch and to push through the first hole the switch in a closed state of the door.
Preferably, the detecting unit is an optical sensor provided inside the structure body and is connected to the antenna using a wire harness. In this case, the sensor is configured to detect an opening-closing state of the door based on switching between brightness and darkness which is associated with a movement of the door.
Preferably, a second hole through which a wire harness which is connected to the detecting unit passes is provided in the shielding portion.
Preferably, a conductive material is filled in an interval between the wire harness and the second hole.
Preferably, both of the first and second holes are formed as a long (oblong) hole, and long sides of the long hole are disposed so as to be orthogonal to each other when viewed from a front face of the first hole. Preferably, the detecting unit is a magnetic sensor which detects a magnetic field of a magnet provided at the door. Preferably, the shielding portion is formed of a radio wave reflecting material or a radio wave absorbing material, and is a wall surface of the housing which faces the magnetic sensor.

### DESCRIPTION OF THE DRAWINGS

Fig. 1 is an external perspective view which illustrates a configuration of a document reading apparatus according to a first embodiment.
Figs. 2A and 2B are external perspective views which illustrate a schematic configuration of a reading unit according to the first embodiment.
Fig. 3 is a diagram which illustrates a schematic configuration of an opening-closing detecting mechanism according to the first embodiment.
Fig. 4 is a block diagram which illustrates a hardware configuration of a main body unit and the reading unit according to the first embodiment.
Fig. 5 is a block diagram which illustrates a functional configuration of the main body unit and the reading unit according to the first embodiment.
Fig. 6 is a flowchart which describes an operation example of the main body unit and the reading unit according to the first embodiment.
Fig. 7 is an external perspective view which illustrates a schematic configuration of a reading unit according to a second embodiment.
Fig. 8 is a diagram which illustrates a schematic configuration of an opening-closing detecting mechanism according to the second embodiment.
Fig. 9 is a diagram which illustrates a schematic configuration of the opening-closing detecting mechanism according to the second embodiment.
Fig. 10 is an external perspective view which illustrates a schematic configuration of a reading unit according to a third embodiment.
Fig. 11 is a diagram which illustrates a schematic configuration of an opening-closing detecting mechanism according to the third embodiment.

### DETAILED DESCRIPTION

An exemplary embodiment provides a reading apparatus which can prevent a radio wave in a housing from being leaked to the outside.

In general, according to one embodiment, a reading apparatus is a reading apparatus which reads information from an RFID tag which is attached to a commodity, the apparatus is provided with a housing, a door, a detecting unit, an antenna, and a shielding portion. The housing includes an opening portion as an entrance of the commodity, and a storage chamber for receiving the commodity in the inside thereof. The door opens or closes the opening portion. The detecting unit is provided at a portion in the housing which is in contact with, or is close to the door in a closed state of the door, and detects opening or closing of the door. The antenna is provided inside the housing, and reads information from the RFID tag of the commodity which is received in the storage chamber in the closed state of the door. The shielding portion shields a radio wave which is leaked from the inside to the outside of the housing at a portion at which the detecting unit is provided.

### First Embodiment

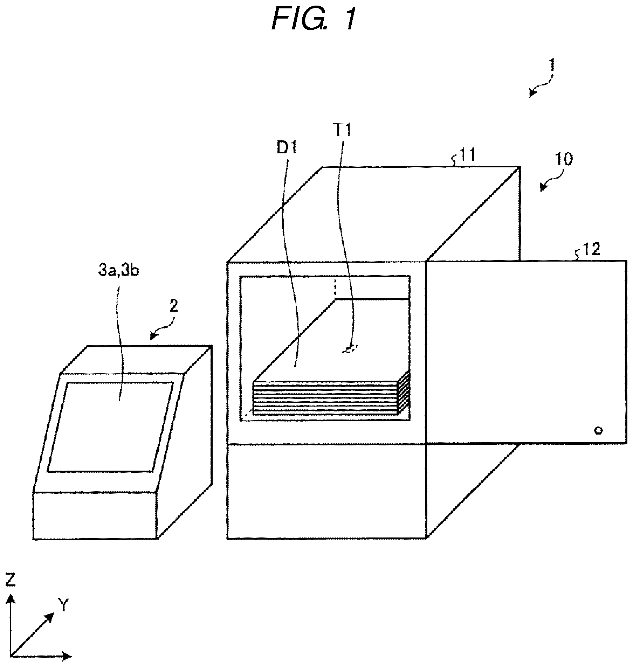

Fig. 1 is an external perspective view which illustrates a configuration of a document reading apparatus 1 according to a first embodiment. The document reading apparatus 1 is an apparatus for reading a radio frequency identifier (RFID) tag T1 which is attached to a document D1 such as a statement, an admission ticket, a document, a license, or a passport. The document reading apparatus 1 is used by being provided on a desk, or the like, for example. Fig. 1 illustrates a state in which a door 12, which will be described later, of a reading unit 10 is opened.

The document reading apparatus 1 is provided with a main body unit 2, and the reading unit 10 which corresponds to the reading apparatus in the embodiment. The main body unit 2 is provided with a display 3b in which a touch panel 3a is provided on the front surface thereof. As the display 3b, for example, a liquid crystal display is used.

The reading unit 10 is a reader writer device in which it is possible to read information from the RFID tag T1 which is attached to the document D1, or write information in the RFID tag T1. According to the embodiment, the RFID tag T1 stores information such as a document code which identifies the document D1 to which the RFID tag T1 is attached.

The reading unit 10 is connected to the main body unit 2 using a cable (not illustrated), or the like. The reading unit 10 outputs (sends) various information such as the document code which is read from the RFID tag T1 to the main body unit 2 in a wired or wireless manner. In addition, in the embodiment, the main body unit 2 and the reading unit 10 are separately formed; however, it is not limited to this, and the units may be integrally formed.

A storage region for writing a registered flag, which will be described later, is prepared in the RFID tag T1. A presence or absence of the registered flag is checked in a gate which is provided in an entrance of a floor on which the document reading apparatus 1 is provided, and a warning is made with respect to an RFID tag with no registered flag using a notification unit such as a buzzer.

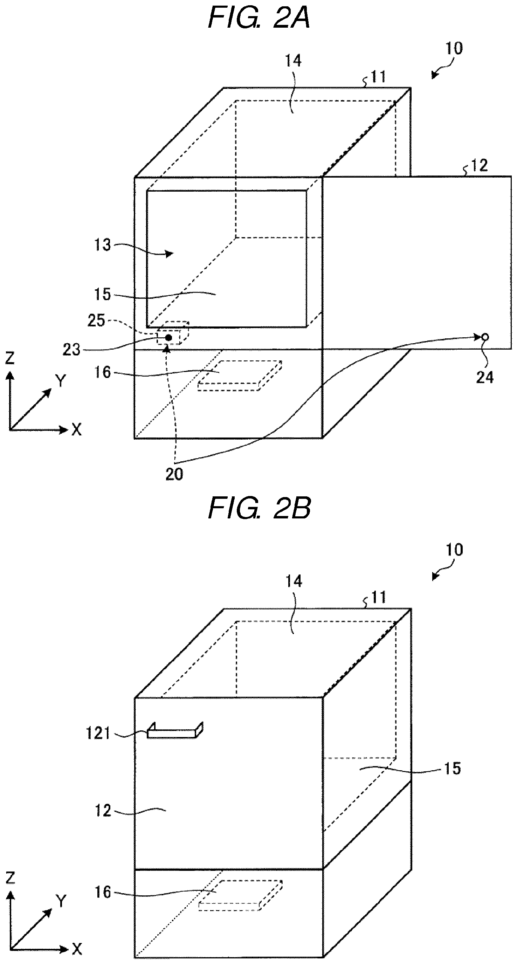

Hereinafter, the reading unit 10 will be described. Figs. 2A and 2B are external perspective views which illustrate a schematic configuration of the reading unit 10. Fig. 2A illustrates an open state in which the door 12 of the reading unit 10 is opened, and Fig. 2B illustrates a closed state in which the door 12 of the reading unit 10 is closed.

The reading unit 10 includes a housing 11 which mainly configures an exterior of the reading unit 10, and the door 12 for opening or closing an opening portion 13 which is provided in the housing 11. The housing 11 is formed in an approximately box shape, has a depth dimension which is larger than a width dimension, and has a long proportion in the depth direction. The housing 11 may be provided integrally with the main body unit 2, and may have a configuration which is detachable from the main body unit 2 (document reading apparatus 1).

The door 12 is attached so as to be opened or closed using a hinge (not illustrated) which is provided on the right front face of the main body unit 2. The door 12 opens or closes the opening portion 13 (storage chamber 14). The door 12 is attached with an opening-closing lever 121. A user opens or closes the door 12 by holding the opening-closing lever 121.

The opening portion 13 is formed in a size through which a plurality of documents D1 can pass at a time. The housing 11 has the storage chamber 14 which can accommodate the plurality of documents D1 in the inside thereof. A user can puts the document D1 in the inside of the storage chamber 14 or takes out the document D1 from the storage chamber 14 through the opening portion 13 of the housing 11, by setting the door 12 to an open state. In addition, the document D1 may be put in the inside of the storage chamber 14 in a state of being received in a storage container which is formed of an insulating (radio wave transmissive) member such as wood or glass.

In the storage chamber 14, the document D1 is mounted on a mounting surface 15 which is a base of the storage chamber 14. The mounting surface 15 is configured with a plate-shaped member with an insulating property (radio wave transmitting property) such as wood or glass, and is supported with a predetermined interval with the base of the housing 11. A wall surface in the inside of the storage chamber 14 excluding the mounting surface 15 is formed of a member which reflects a radio wave (radio wave reflecting material). As the member, it is possible to use a well-known and common radio wave reflecting material such as metal, a molding material, or ferrite.

In addition, a planar RFID antenna 16, a circuit board (not illustrated), or the like, is provided in a space between the mounting surface 15 and the base of the housing 11. The RFID antenna 16 communicates with the RFID tag T1 attached to each document D1 which is present in the storage chamber 14, that is, the RFID tag T1 which is attached to each document D1 received in the storage chamber 14 by outputting a radio wave in the UHF band, or the like. The RFID antenna 16 outputs a radio wave when the door 12 is closed in cooperation with a reader writer unit 41 which will be described later.

Wall faces of the housing 11 (storage chamber 14) and the door 12 are formed of a radio wave reflecting material or a member which absorbs a radio wave (radio wave absorbing material) in order to prevent a radio wave in the housing 11 (storage chamber 14) from being leaked to the outside, or a radio wave in the outside from permeating into the housing 11 (storage chamber 14). As the member, it is possible to use the well-known and common radio wave reflecting material such as metal, a molding material ferrite, or a radio wave absorbing material.

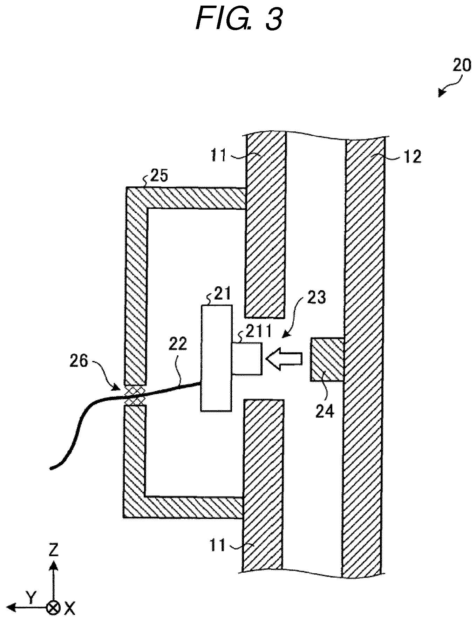

An opening-closing detecting mechanism 20 for detecting an opening-closing state of the door 12 is provided at a portion of the housing 11 which is in contact with, or is close to the door 12 when the door 12 is in a closed state. More specifically, the opening-closing detecting mechanism 20 is provided at the portion (edge portion) of the housing 11 which is in contact with, or is close to the door 12 in the closed state of the door 12, and a portion of the door 12 which faces the edge portion. Hereinafter, a configuration of the opening-closing detecting mechanism 20 will be described with reference to Figs. 2A and 3.

Fig. 3 is a diagram which illustrates a schematic configuration of the opening-closing detecting mechanism 20. Here, Fig. 3 illustrates a partial sectional view in which the opening-closing detecting mechanism 20 is viewed in an X direction in Figs. 2A and 2B.

As illustrated in Fig. 3, the opening-closing detecting mechanism 20 is provided with a switch 21 as the opening-closing detecting unit 42 for detecting an opening-closing state of the door 12, which will be described later. The switch 21 is a mechanical switch which performs a momentary action such as a push switch or a tactile switch. The switch 21 is provided inside the housing 11, and is connected to a circuit board (not illustrated) using a wire harness 22. In addition, a hole 23 with a size in accordance with a pushing portion 211 of the switch 21 is provided in the housing 11 at a position of facing the switch 21.

Meanwhile, a projection portion 24 is formed on a wall surface of the door 12 on the housing 11 side at a portion of facing the hole 23 (switch 21) of the housing 11 in a closed state. The projection portion 24 has a diameter smaller than the hole 23, and a height in which it is possible to push the pushing portion 211 of the switch 21 in a closed state of the door 12.

In the above described configuration, when the door 12 is closed, the projection portion 24 of the door 12 moves in an arrow direction (left direction) in the figure, and the switch 21 is turned on when pressing the pushing portion 211 through the hole 23. In addition, when the door 12 is opened, the projection portion 24 of the door 12 moves in the right direction in the figure, and the switch 21 is turned off when pressing of the pushing portion 211 is released. The switch 21 detects an opening-closing state of the door 12 based on switching of ON/OFF using the projection portion 24. Specifically, the switch 21 outputs a signal denoting a closed state of the door 12 to the circuit board through the wire harness 22 based on a condition in which the switch is switched from OFF to ON. In addition, the switch 21 outputs a signal denoting an open state of the door 12 to the circuit board through the wire harness 22 based on a condition in which the switch is switched from ON to OFF.

Meanwhile, in the above described configuration, there is a possibility that a radio wave from the RFID antenna 16 may be leaked to the outside of the housing 11 (reading unit 10) through the hole 23 of the housing 11. In addition, there is a possibility that a radio wave in the outside of the housing 11 (reading unit 10) may permeate the inside of the housing 11 (reading unit 10) through the hole 23 of the housing 11. Such leaking or permeating of a radio wave causes misreading of the RFID tag T1, malfunction, or the like, in a reading apparatus of mine and thine.

Therefore, the opening-closing detecting mechanism 20 in the embodiment is provided with a shielding portion which shields a radio wave which is leaked to the outside from the inside of the housing 11 and a radio wave which permeates the inside from the outside of the housing 11, at a portion at which the switch 21 is provided.

Specifically, the opening-closing detecting mechanism 20 is provided with a cover portion 25 (structure body) which covers the periphery of the switch 21 and the hole 23 as the shielding portion. The cover portion 25 is formed of a radio wave reflecting material or a radio wave absorbing material, and is connected to an inner wall of the housing 11 using screwing, welding, or the like, without an interval. In addition, in Fig. 3 (Figs. 2A and 2B) a shape of the cover portion 25 is formed in a box shape; however, it is not limited to this, and may be formed in a dome shape, or the like.

A hole 26 through which the wire harness 22 passes is provided in the cover portion 25. Here, a size of the hole 26 is not important, particularly, and may be set to a size in accordance with a diameter of the wire harness 22, for example. It is preferable that an interval between the wire harness 22 and the hole 26 be filled with a conductive material with a radio wave (electromagnetic) shielding property. As the conductive material, it is possible to use a metallic mesh, porosity metal, or the like. In this manner, it is possible to prevent a radio wave from being leaked, and from permeating through the hole 26.

According to the reading unit 10 in the above described configuration, a user can collectively read the RFID tag T1 which is attached to each of the documents D1, by accommodating the plurality of documents D1 in the storage chamber 14. In addition, it is possible to suppress a wrong operation in which the document D1 is extracted, the document D1 is added, or the like, in the middle of reading, by separating the storage chamber 14 in which the RFID antenna 16 performs reading from a space in which a user is present.

It is possible to prevent a situation in which a radio wave in the housing 11 is leaked to the outside, and a radio wave in the outside of the housing 11 permeates inside, by covering the inner surface of the storage chamber 14 using a radio wave reflecting material, and covering an outer surface (housing 11 and door 12) of the reading unit 10 using a radio wave reflecting material or a radio wave absorbing material. In addition, it is possible to prevent a radio wave which is leaked from the inside of the housing 11 and which permeates from the outside of the housing 11 at the portion at which the switch 21 is provided, by covering the periphery of the switch 21 and the hole 23 using the cover portion 25 which is formed of the radio wave reflecting material and the radio wave absorbing material.

Since it is possible to limit a range to which a radio wave of the RFID antenna 16 extends to the inside of the housing 11 in this manner in the reading unit 10, it is possible to prevent the radio wave in the housing 11 from having an influence on the RFID tag T1 in the outside. In addition, since it is possible to shield the storage chamber 14 from a radio wave in the outside, in the reading unit 10, an occurrence of misreading of the RFID tag T1, malfunction, or the like, can be prevented.

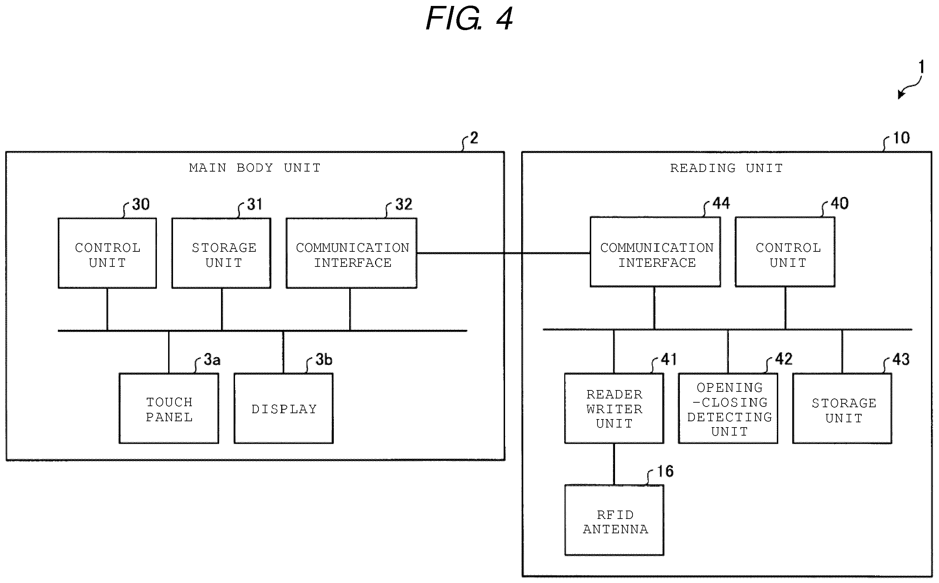

Subsequently, a hardware configuration of the document reading apparatus 1 will be described. Fig. 4 is a block diagram which illustrates a hardware configuration of the main body unit 2 and the reading unit 10.

The main body unit 2 is provided with a control unit 30 with a computer configuration which is configured with a central processing unit (CPU), a read only memory (ROM), a random access memory (RAM), and the like. The ROM stores various programs and various data which are executed by the CPU. The RAM temporarily stores data or a program when the CPU executes various programs.

A touch panel 3a and a display 3b are connected to the control unit 30 through various input-output circuits (not illustrated).

In addition, a storage unit 31, a communication interface 32, and the like, are connected to the control unit 30 through various input-output circuits (not illustrated).

The storage unit 31 is a storage device which is provided with a non-volatile storage medium such as a hard disk drive (HDD) and a solid state drive (SSD). The storage unit 31 stores various programs or various data which are related to an operation of the main body unit 2. In addition, the storage unit 31 stores a document code which is read by the reading unit 10. The storage unit 31 may store a data table (hereinafter, referred to as table) such as a database in which a document D1 related to a document code or information of a user, or the like, who has the document D1 is correlated, by being associated with the document code. The communication interface 32 is an interface for sending and receiving of various data between the interface and the reading unit 10.

Meanwhile, the reading unit 10 is provided with a control unit 40 with a computer configuration which is configured with a CPU, a ROM, a RAM, and the like. The ROM stores various programs and various data which the CPU executes. The RAM temporarily stores data or a program when the CPU executes various programs.

In addition, a reader writer unit 41, the opening-closing detecting unit 42, a storage unit 43, a communication interface 44, and the like, are connected to the control unit 40 through various input-output circuits (not illustrated).

The reader writer unit 41 causes the RFID antenna 16 to transmit a modulated wave (radio wave) for reading and writing the RFID tag T1 by driving the RFID antenna. The reader writer unit 41 outputs various information (for example, document code, or the like) which are read from the RFID tag T1 through the RFID antenna 16 to the control unit 40. In addition, the reader writer unit 41 performs writing of information with respect to the RFID tag T1 by outputting the information which is a writing target (for example, flag information, or the like) through the RFID antenna 16.

The opening-closing detecting unit 42 is the switch 21 which detects an opening-closing state of the door 12. A detection result of the opening-closing detecting unit 42 is output to the control unit 40. The storage unit 43 is a storage device which is provided with a non-volatile storage medium such as an HDD, an SSD, or the like. The storage unit 43 stores various programs or various data which are related to an operation of the reading unit 10. The communication interface 44 is an interface for sending and receiving various data between the interface and the main body unit 2. In addition, the control unit 40, the reader writer unit 41, the storage unit 43, and the communication interface 44 which are provided in the reading unit 10 are mounted on a circuit board (not illustrated).

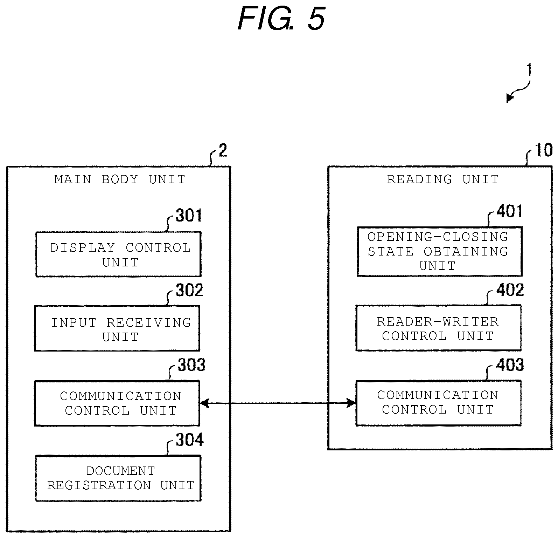

Subsequently, a functional configuration of the document reading apparatus 1 will be described. Fig. 5 is a block diagram which illustrates a functional configuration of the main body unit 2 and the reading unit 10.

The control unit 30 (CPU) of the main body unit 2 causes a display control unit 301, an input receiving unit 302, a communication control unit 303, and a document registration unit 304 to be executed as a functional unit by cooperating with a program which is stored in the storage unit 31.

The display control unit 301 controls the display 3b, and causes the display 3b to display various screens. For example, the display control unit 301 causes a screen including an operator for instructing a start of reading of a document code (RFID tag T1) (hereinafter, referred to as start button for reading), and an operator for instructing ending of reading (hereinafter, referred to as ending button for reading) to be displayed. When a table is stored in the storage unit 31, the display control unit 301 may read information corresponding to a document code which is sent from the reading unit 10, and causes the display 3b to display the information.

The input receiving unit 302 receives an operation input through the touch panel 3a. For example, when an operator is operated (touching operation) on an operation screen which is displayed on the display 3b, the input receiving unit 302 outputs instruction information corresponding to the operator to the control unit 30.

The communication control unit 303 controls the communication interface 32, and sending and receiving various information between the communication control unit and the reading unit 10 through the communication interface 32. For example, when the start button for reading is operated, the communication control unit 303 sends instruction information which instructs a start of reading to the reading unit 10. In addition, the communication control unit 303 receives a document code which is sent from the reading unit 10. When the ending button for reading is operated, the communication control unit 303 sends instruction information which instructs ending of reading to the reading unit 10. When a sales registration using the document registration unit 304 is completed, the communication control unit 303 sends instruction information which instructing a completion of the registration to the reading unit 10.

The document registration unit 304 registers a document code which is sent from the reading unit 10 as a document code which is read, by storing the document code in a predetermined region of the storage unit 31. Specifically, the document registration unit 304 stores the document code which is received by the communication control unit 303 in a storage region (for example, database, or the like) for registration, together with a date in which the reception is performed. In addition, the storage region for registration may be a form in which an external device which can communicate with the main body unit 2 is provided.

Meanwhile, the control unit 40 (CPU) of the reading unit 10 causes an opening-closing state obtaining unit 401, a reader-writer control unit 402, and a communication control unit 403 to be executed as a functional unit by cooperating with a program stored in the storage unit 43.

The opening-closing state obtaining unit 401 obtains opening-closing state information which denotes whether the door 12 is in an open state or is in a closed state, by cooperating with the opening-closing detecting unit 42.

The reader-writer control unit 402 performs reading of an RFID tag T1 which is attached to a document D1, and writing with respect to the RFID tag T1, by controlling the reader writer unit 41.

Specifically, when a start of reading is instructed from the document reading apparatus 1, and opening-closing state information obtained by the opening-closing state obtaining unit 401 denotes a closed state of the door 12, the reader-writer control unit 402 starts reading.

When ending of reading is instructed from the main body unit 2, the reader-writer control unit 402 ends reading by the reader writer unit 41. In addition, when a completion of a registration is instructed from the main body unit 2, the reader-writer control unit 402 controls the reader writer unit 41, and starts writing of a registered flag. Here, the registered flag is information which denotes a completion of a document registration, and which is written in a predetermined storage region included in the RFID tag T1.

In addition, when the door 12 enters an open state between a start of reading of the RFID tag T1 and writing of the registered flag, the reader-writer control unit 402 ends reading, and performs resetting processing in which a document code which is read by that time is reset. By performing the resetting processing, resetting is also performed with respect to the document code which is sent (registered) to the document reading apparatus 1. In addition, the reader-writer control unit 402 executes reading of the RFID tag T1 again, when confirming that the door 12 is closed again.

In this manner, it is possible to reliably read a document D1 in the storage chamber 14 even when a document D1 of which the RFID tag T1 is read is extracted from the storage chamber 14, or when a document D1 of which the RFID tag T1 is not read is added to the storage chamber 14, before writing a registered flag. In addition, it may be a form in which a screen for notifying of an open state of the door 12 is displayed on the display 3b of the main body unit 2, by notifying the main body unit 2 of the open state of the door 12.

The communication control unit 403 controls the communication interface 44, and sends and receives various information between the communication control unit and the main body unit 2 through the communication interface 44. For example, the communication control unit 403 receives instruction information for instructing a start of reading which is sent from the main body unit 2. In addition, the communication control unit 403 sends a document code which the reader-writer control unit 402 reads from the RFID tag T1 to the main body unit 2. The communication control unit 403 receives instruction information for instructing ending of reading which is sent from the main body unit 2. In addition, the communication control unit 403 receives instruction information for instructing a completion of a registration which is sent from the main body unit 2.

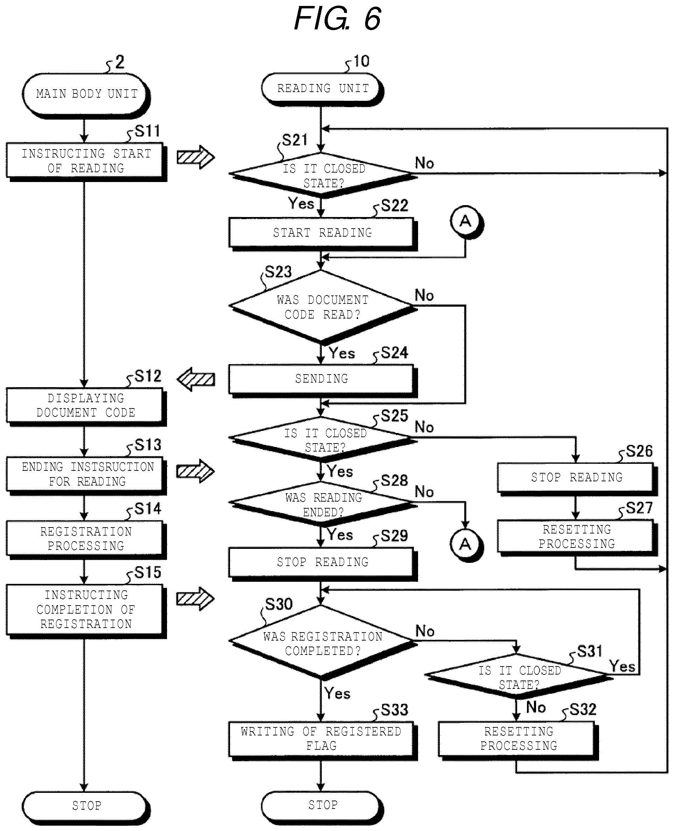

Subsequently, an operation of the document reading apparatus 1 will be described. Fig. 6 is a flowchart which describes an operation example of the main body unit 2 and the reading unit 10.

A user who uses the document reading apparatus 1 opens the door 12 of the reading unit 10, and accommodates a document D1 in the inside of the storage chamber 14. Subsequently, when the user operates the start button for reading which is displayed on the display 3b of the main body unit 2, the process is started.

In the main body unit 2, when the input receiving unit 302 receives the operation of the start button for reading, the communication control unit 303 sends instruction information for instructing a start of reading to the reading unit 10 (step S11).

In the reading unit 10, when the communication control unit 403 receives instruction information for instructing a start of reading, the reader-writer control unit 402 determines whether or not the door 12 is in a closed state based on opening-closing state information which is obtained by the opening-closing state obtaining unit 401 (step S21). Here, the reader-writer control unit 402 stands by until the door 12 enters a closed state (No in step S21), when it is determined that the door 12 is in the open state. In addition, it may be a form in which the reader-writer control unit 402 causes a screen for urging closing of the door 12 to be displayed, by cooperating with the display control unit 301 of the main body unit 2 at a standby time in step S21.

When it is determined that the door 12 is in a closed state (Yes in step S21) in step S21, the reader-writer control unit 402 starts reading of the RFID tag T1 (step S22). Subsequently, the reader writer unit 41 determines whether or not a document code is read from the RFID tag T1 (step S23). Here, when the document code is not read (No in step S23), the process proceeds to step S25.

In addition, when the document code is read (Yes in step S23), the communication control unit 403 sequentially sends the document code (step S24) to the main body unit 2, and the process proceeds to step S25.

In the subsequent step S25, the reader-writer control unit 402 determines whether or not the door 12 is in a closed state, based on opening-closing information which is obtained by the opening-closing state obtaining unit 401 (step S25). When it is determined that the door is in an open state (No in step S25), the reader-writer control unit 402 stops reading of the RFID tag T1 (step S26). In addition, the reader-writer control unit 402 performs resetting processing in which a document code which is read by that time is reset (step S27), and the process returns to step S21 again. By performing the resetting processing, the document code which is sent to the main body unit 2, and is registered is also subjected to resetting.

In addition, when it is determined that the door is in a closed state in step S25 (Yes in step S25), the reader-writer control unit 402 determines whether or not ending of reading is instructed from the main body unit 2 (step S28). Here, when there is no instruction of ending reading (No in step S28), the process returns to step S23.

When reading of the RFID tag T1 is started in a state in which the storage chamber 14 is vacant, a loop of No in step S23→ Yes in step S25→ and No in step S28 is continued in a state in which the RFID tag T1 is not read at all. Therefore, when a predetermined time is passed (for example, 5 seconds), or the above described loop is executed for a predetermined times in the state in which the RFID tag T1 is not read at all, reading of the RFID tag T1 may be forcibly ended, in order to avoid such a state. In addition, in such a case, it is preferable that the reader-writer control unit 402 cause a message denoting that it is not possible to read the RFID tag T1 to be displayed by cooperating with the display control unit 301 of the main body unit 2.

In the main body unit 2, when the communication control unit 303 receives a document code from the reading unit 10, the display control unit 301 displays the document code on the display 3b (step S12).

A user who operates the main body unit 2 refers to the document code which is displayed on the display 3b, and operates the ending button for reading which is displayed on the display 3b, when confirming that document codes of all of the documents D1 which are input to the storage chamber 14 are displayed. In addition, when the input receiving unit 302 receives the operation of the ending button for reading, the communication control unit 303 sends instruction information for instructing ending of reading to the reading unit 10 (step S13).

In the reading unit 10, when the communication control unit 403 receives instruction information for instructing ending of reading, the reader-writer control unit 402 determines that ending of reading is instructed (Yes in step S28). Subsequently, the reader-writer control unit 402 stops reading of the RFID tag T1 (step S29).

Subsequently, the reader-writer control unit 402 determines whether or not a completion of a registration is instructed from the main body unit 2 (step S30). When there is no instruction of a completion of a registration (No in step S30), the reader-writer control unit 402 determines whether or not the door 12 is in a closed state, based on the opening-closing state information which is obtained by the opening-closing state obtaining unit 401 (step S31).

Here, when it is determined that the door is in a closed state (Yes in step S31), the process returns to step S30. In addition, when it is determined that the door is in an open state (No in step S31), the reader-writer control unit 402 performs the same resetting processing as that in step S27 (step S32), and the process returns to step S21 again.

In the main body unit 2, the document registration unit 304 performs registration processing with respect to each document code which is displayed (step S14). In addition, the communication control unit 303 sends instruction information for instructing a completion of a registration to the reading unit 10 (step S15), and ends the process.

In the reading unit 10, when the communication control unit 403 receives instruction information for instructing a completion of a registration, the reader-writer control unit 402 determines that the completion of the registration is instructed (Yes in step S30). In addition, the reader-writer control unit 402 writes a registered flag in the RFID tag T1 of each document D1 (step S33), by controlling the reader writer unit 41, and ends the process.

It may be a form in which the reader-writer control unit 402 causes a screen which denotes a state in which the door 12 is still in a closed state to be displayed, by cooperating with the display control unit 301 of the main body unit 2 in the middle of writing the registered flag. In addition, it may be a form in which the reader-writer control unit 402 causes a screen which urges opening of the door 12 to be displayed, by cooperating with the display control unit 301 of the main body unit 2 when writing of the registered flag is ended.

As described above, according to the reading unit 10, it is possible to collectively perform reading of RFID tag T1 which is attached to each of the documents D1, in a state in which a document D1 is separated from a space in which a user, or the like, is present, by accommodating the document D1 as a reading targetin the storage chamber 14, and sets the door 12 to a closed state. According to the reading unit 10, it is possible to efficiently perform reading of the RFID tag T1, since it is possible to limit a range to which a radio wave of the RFID antenna 16 extends to the inside of the housing 11.

### Second Embodiment

Subsequently, a second embodiment will be described. In the above described first embodiment, an example in which the switch 21 is used as the opening-closing detecting unit 42 was described. In the second embodiment, an example in which an optical sensor is used as the opening-closing detecting unit 42 will be described. In addition, the same element as that in the first embodiment will be given the same reference numeral, and descriptions thereof will be omitted.

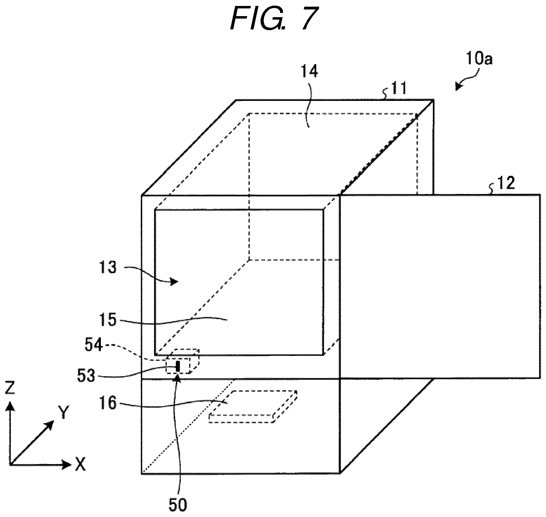

Fig. 7 is an external perspective view which illustrates a schematic configuration of a reading unit 10a according to the second embodiment. Fig. 7 illustrates an open state of the reading unit 10a in which the door 12 is open. In addition, a closed state in which the door 12 of the reading unit 10a is closed is the same as that in the above described Fig. 2B.

As illustrated in Fig. 7, an opening-closing detecting mechanism 50 for detecting an opening-closing state of the door 12 is provided at a portion of the housing 11 which is in contact with, or is close to the door 12 in a closed state of the door 12. More specifically, the opening-closing detecting mechanism 50 is provided at a portion (edge portion) of the housing 11 which is in contact with, or is close to the door 12 in a closed state of the door 12. Hereinafter, a configuration of the opening-closing detecting mechanism 50 will be described with reference to Figs. 7, 8, and 9.

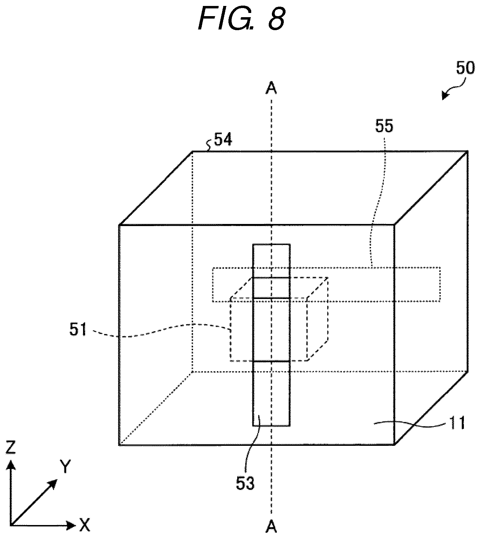

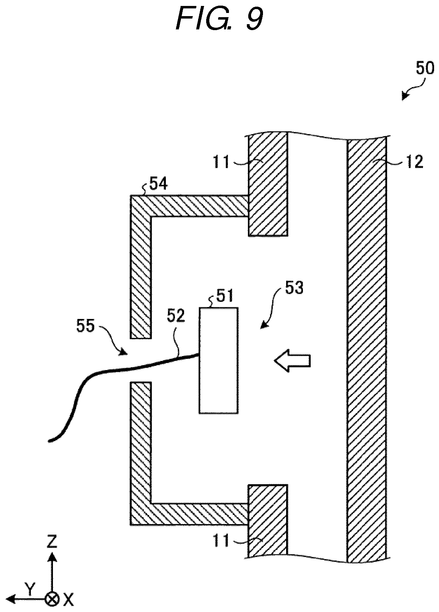

Figs. 8 and 9 are diagrams which illustrate a schematic configuration of the opening-closing detecting mechanism 50. Here, Fig. 8 illustrates a partial perspective view in which the opening-closing detecting mechanism 50 is viewed in a Y direction in Fig. 7. In addition, Fig. 9 illustrates a partial sectional view in line A-A in Fig. 8 in which the opening-closing detecting mechanism 50 is viewed in an X direction in Fig. 7. In Fig. 8, a wall surface of the housing 11 which is located on a front face side of the opening-closing detecting mechanism 50 is illustrated using a rectangular shape according to a shape of the opening-closing detecting mechanism 50.

As illustrated in Figs. 8 and 9, the opening-closing detecting mechanism 50 is provided with an optical sensor 51 as the opening-closing detecting unit which detects an opening-closing state of the door 12. The optical sensor 51 is an optical detector such as a photodiode, for example. The optical sensor 51 is provided inside the housing 11, and is connected to a circuit board (not illustrated) through a wire harness 52 (refer to Fig. 9). In addition, a slit-shaped hole (long hole) 53 for taking in light from the outside is provided in the housing 11 at a position of facing the optical sensor 51.

In the above described configuration, when the door 12 is closed, the door 12 moves in an arrow direction (left direction) in Fig. 9, and sets a region in which the optical sensor 51 is placed to a dark state by covering the hole 53. When the door 12 is opened, the door 12 moves in the right direction in Fig. 9, and sets the region in which the optical sensor 51 is placed to a bright state by releasing the hole 53. The optical sensor 51 detects an opening-closing state of the door 12 based on switching between brightness and darkness which is associated with a movement of the door 12. Specifically, the optical sensor 51 outputs a signal denoting a closed state of the door 12 to the circuit board through the wire harness 52 based on switching from brightness to darkness. In addition, the optical sensor 51 outputs a signal denoting an open state of the door 12 to the circuit board through the wire harness 52 based on switching from darkness to brightness.

Meanwhile, in the above described configuration, there is a possibility that a radio wave from the RFID antenna 16 may be leaked to the outside of the housing 11 (reading unit 10a) through a hole 53 of the housing 11. In addition, there is a possibility that a radio wave in the outside of the housing 11 (reading unit 10a) may permeate inside the housing 11 (reading unit 10a) through the hole 53 of the housing 11. Such leaking and permeating of a radio wave causes an occurrence of misreading of the RFID tag T1, malfunction, or the like, in a reading apparatus of mine and thine.

Therefore, in the opening-closing detecting mechanism 50 according to the embodiment, a shielding portion which shields a radio wave which is leaked from the inside to the outside of the housing 11, and a radio wave which permeates inside from the outside of the housing 11 is provided at a portion at which the optical sensor 51 is provided.

Specifically, the opening-closing detecting mechanism 50 is provided with a cover portion 54 (structure body) which covers the periphery of the optical sensor 51 and the hole 53 as the shielding portion. The cover portion 54 is formed of a radio wave reflecting material or a radio wave absorbing material, and is connected to the inner wall of the housing 11 without an interval using screwing, welding, or the like. In addition, in Figs. 8 and 9, a shape of the cover portion 54 is formed in a box shape; however, it is not limited to this, and may be formed in a dome shape, or the like.

A hole 55 through which the wire harness 22 passes is provided in the cover portion 54. Here, a size of the hole 55 is not particularly important, and may be a size in accordance with a diameter of the wire harness 52, for example. In such a case, it is preferable that an interval between the wire harness 22 and the hole 55 be filled with a conductive material with a radio wave shielding property. In this manner, it is possible to prevent a radio wave from being leaked, and prevent a radio wave from permeating through the hole 55.

As illustrated in Fig. 8 or 9, the hole 55 may be a slit-shaped long hole which is the same as the hole 53. When forming the holes 53 and 55 so as to be long holes in this manner, it is preferable to dispose the long holes so that long sides thereof are orthogonal to each other when viewed in a front face direction (Y direction) of the opening-closing detecting mechanism 50 (hole 53). It is possible to cause the holes to function as a filter which eliminates a vertically polarized wave and a horizontally polarized wave of a radio wave, by disposing the holes so that long sides of the holes 53 and 55 are orthogonal to each other in this manner. Due to this, it is possible to efficiently reduce a radio wave which is leaked from the inside of the housing 11, and a radio wave which permeates from the outside of the housing 11 through the holes 53 and 55.

It is preferable to design (form) a size or a shape of the holes 53 and 55 so that a reduction effect becomes optimal according to characteristics of a radio wave (wavelength, or the like) which is output by the RFID antenna 16. In addition, it is preferable to design (form) also a shape or a size of a space which is formed by the housing 11 and the cover portion 54 so that a reduction effect becomes optimal, according to characteristics of a radio wave (wavelength, or the like) which is output by the RFID antenna 16.

In the embodiment, the hole 53 is set to a cavity; however, a film, a sheet, or the like, with a light transmitting property (hereinafter, collectively referred to as light transmitting film) may be attached to the hole 53. In this case, it is preferable to use a film or a sheet with a radio wave absorbing property, and of which a radio wave attenuation amount is large, as the light transmitting film. In this manner, it is possible to efficiently reduce a radio wave which is leaked from the inside of the housing 11, and a radio wave which permeates from the outside of the housing 11 through the hole 53.

### Third Embodiment

Subsequently, a third embodiment will be described. In the third embodiment, an example in which a magnetic sensor is used as the opening-closing detecting unit 42 will be described. In addition, the same reference numerals are given to the same elements as those in the first embodiment, and descriptions thereof will be omitted.

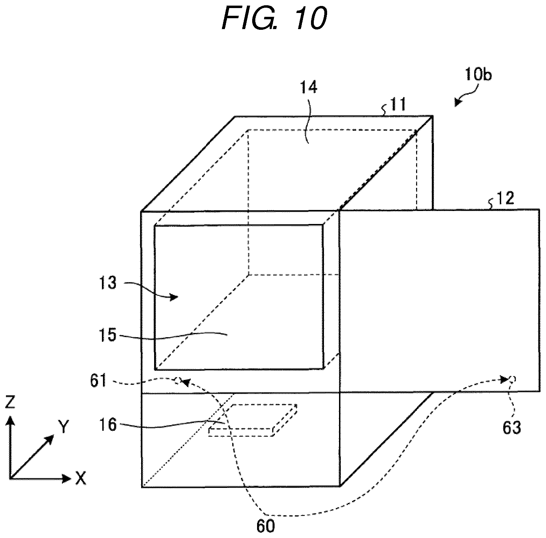

Fig. 10 is an external perspective view which illustrates a schematic configuration of a reading unit 10b according to the third embodiment. Fig. 10 illustrates an open state in which the door 12 of the reading unit 10b is opened. In addition, a closed state in which the door 12 of the reading unit 10b is closed is the same as that in the above described Fig. 2B.

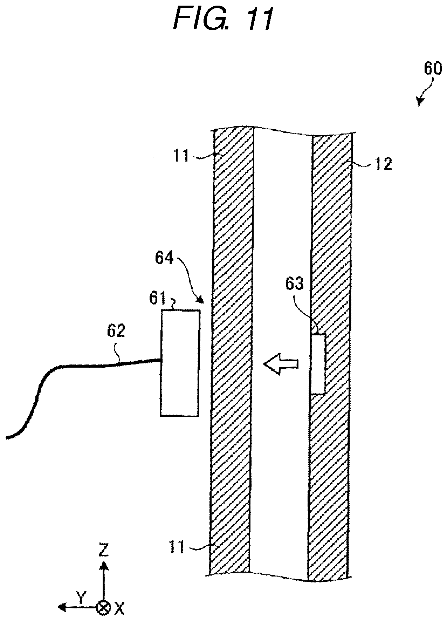

As illustrated in Fig. 10, an opening-closing detecting mechanism 60 for detecting an opening-closing state of the door 12 is provided at a portion of the housing 11 which is in contact with, or is close to the door 12 in a closed state of the door 12. More specifically, the opening-closing detecting mechanism 60 is provided at a portion (edge portion) of the housing 11 which is in contact with, or is close to the door 12 in a closed state of the door 12, and a portion of the door 12 which faces the edge portion. Hereinafter, a configuration of the opening-closing detecting mechanism 60 will be described with reference to Figs. 10 and 11.

Fig. 11 is a diagram which illustrates a schematic configuration of the opening-closing detecting mechanism 60. Here, Fig. 11 illustrates a partial sectional view in which the opening-closing detecting mechanism 60 is viewed in the X direction in Fig. 10.

As illustrated in Fig. 11, the opening-closing detecting mechanism 60 is provided with a magnetic sensor 61 as the opening-closing detecting unit 42 which detects an opening-closing state of the door 12. The magnetic sensor 61 is a sensor device such as a coil, a hall element, or the like, for example, which detects a magnitude of a magnetic field. The magnetic sensor 61 is provided inside the housing 11, and is connected to a circuit board (not illustrated) through the wire harness 62. In addition, a magnet 63 is embedded in the door 12 at a position which faces the magnetic sensor 61 of the housing 11 in a closed state of the door 12.

In the above described configuration, when the door 12 is closed, the magnet 63 embedded in the door 12 moves in an arrow direction (left direction) in the figure, and a magnetic field which acts with respect to the magnetic sensor 61 by getting close to the magnetic sensor 61 increases. In addition, when the door 12 is opened, the magnet 63 embedded in the door 12 moves in the right direction in the figure, and a magnetic field which acts with respect to the magnetic sensor 61 by being separated from the magnetic sensor 61 decreases. The magnetic sensor 61 detects an opening-closing state of the door 12 based on an increase and decrease of a magnetic field. Specifically, the magnetic sensor 61 outputs a signal denoting a closed state of the door 12 to the circuit board through the wire harness 62 on condition that a magnitude of a magnetic field reaches a predetermined first level. In addition, the magnetic sensor 61 outputs a signal denoting an open state of the door 12 to the circuit board through the wire harness 62 on condition that a magnitude of a magnetic field reaches a predetermined second level (here, first level>second level).

The opening-closing detecting mechanism 60 is provided with a shielding portion which shields a radio wave which is leaked from the inside to the outside of the housing 11, and a radio wave which permeates inside from the outside of the housing 11 at a portion at which the magnetic sensor 61 is provided. Specifically, the shielding portion corresponds to a wall surface 64 of the housing 11, which is formed of a radio wave reflecting material or a radio wave absorbing material, and faces the magnetic sensor 61.

In the opening-closing detecting mechanism 60 according to the embodiment, the front face of the magnetic sensor 61 is shielded by the wall surface 64, differently from the above described first and second embodiments. Accordingly, in the reading unit 10b in the embodiment, it is possible to shields a radio wave which is leaked from the inside of the housing 11, and a radio wave which permeates from the outside of the housing 11 at a portion at which the magnetic sensor 61 is provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims are intended to cover such forms or modifications as would fall within the scope of the inventions.

For example, in the above described embodiment, a portion at which the opening-closing detecting unit 42 (switch 21, optical sensor 51, and magnetic sensor 61) is set to the edge portion of the housing 11 under the mounting surface 15; however, it is not limited to this. Specifically, the portion is not important when it is a portion which is in contact with, or is close to the door 12 in a closed state of the door 12, and may be set to edge portions in the upper part, or on the right and left sides of the housing 11.

In addition, in the above described embodiment, it is set to a form in which reading of the RFID tag T1 is started according to an operation instruction from a user; however, it is not limited to this. As another form, for example, it may be a form in which reading of the RFID tag T1 is automatically started by being linked with switching to a closed state of the door 12, without an operation instruction from a user.

In the above described embodiment, it is set to a form in which reading is ended, and resetting processing is executed when the door 12 is in an open state between a start of reading of the RFID tag T1 and writing of a registered flag; however, it is not limited to this. As another form, for example, it may be a form in which a locking mechanism for holding (locking) a closed state of the door 12 is provided at a contact portion between the housing 11 of the reading unit 10 and the door 12, and the door 12 is controlled so as not to be opened. Specifically, a closed state is held so that the door 12 is not opened between starting reading of the RFID tag T1 and writing of the registered flag, by controlling the locking mechanism using the reader-writer control unit 402. In this manner, it is possible to prevent a situation in which a document D1 of which a RFID tag T1 is already read is extracted from the storage chamber 14, or a situation in which a document D1 of which a RFID tag T1 is not read is added into the storage chamber 14 before writing the registered flag, before something happens.

In the above described embodiment, it is set to a form in which reading of a RFID tag T1 is ended according to an ending instruction from a user; however, it is not limited to this. As another form, for example, it may be a form in which, when RFID tags T1 of the number which is instructed from a user is read, the reading is automatically ended.

In the above described embodiment, a reading target (commodity) of the reading unit 10 is set to a document; however, it is not limited to this, and it may be another commodity.

An example of related art includes JP-A-2005-267075.

## Claims

1. A reading apparatus (1) for reading information from an RFID tag (T1) which is attached to a commodity (D1), the apparatus comprising:
a housing (11) which includes an opening portion (13) as an entrance of the commodity, and a storage chamber (14) for receiving the commodity in the inside thereof;
a door (12) which opens or closed the opening portion;
a detecting unit (20) which is provided at a portion in the housing which is in contact with, or is close to the door in a closed state of the door, and detects opening or closing of the door;
an antenna (16) which is provided inside the housing, and reads information from the RFID tag of the commodity which is received in the storage chamber in the closed state of the door; and
a shielding portion (25, 54, 64) which shields a radio wave which is leaked from the inside to the outside of the housing at a portion at which the detecting unit is provided;
wherein the shielding portion is a structure body which is formed of a radio wave reflecting material or a radio wave absorbing material,
**characterized in that**
a first hole (23, 53) for detecting opening or closing of the door using the detecting unit is provided at a portion of the housing which faces the detecting unit, and
the shielding portion is arranged so as to cover the detecting unit and the first hole to shield a radiowave which is leaked to the outside from the inside of the housing.

2. The apparatus according to claim 1, wherein the structure body is formed in a box shape.

3. The apparatus according to claim 1, the structure body is formed in a dome shape.

4. The apparatus according to any one of claims 1 to 3, wherein the detecting unit comprises a mechanical switch (21) and a projection portion (24),
wherein
the switch is provided inside the structure body and is connected to the antenna (16) using a wire harness (22), and
the projection portion (24) is formed on the housing side of a wall surface of the door (12) in a manner to face the switch and to push through the first hole the switch in a closed state of the door.

5. The apparatus according to any one of claims 1 to 3, wherein the detecting unit is an optical sensor provided inside the structure body and is connected to the antenna (16) using a wire harness (55) wherein the sensor is configured to detect an opening-closing state of the door (12) based on switching between brightness and darkness which is associated with a movement of the door (12).

6. The apparatus according to any one of claims 1 to 5,
wherein a second hole (26, 55) through which a wire harness (22, 52) which is connected to the detecting unit passes is provided in the shielding portion, and
wherein both of the first and second holes are formed as a long hole, and long sides of the long hole are disposed so as to be orthogonal to each other when viewed from a front face of the first hole.

7. The apparatus according to any one of claims 1 to 6,
wherein a second hole (26, 55) through which a wire harness (22, 52) which is connected to the detecting unit passes is provided in the shielding portion, and
wherein a conductive material is filled in an interval between the wire harness and the second hole.

8. The apparatus according to claim 1,
wherein the detecting unit is a magnetic sensor which detects a magnetic field of a magnet provided at the door, and wherein the shielding portion is formed of a radio wave reflecting material or a radio wave absorbing material, and is a wall surface of the housing which faces the magnetic sensor.

## Patentansprüche

1. Lesevorrichtung (1) zum Ablesen von Information von einem RFID-Etikett (T1), das an eine Ware (D1) befestigt ist, wobei die Vorrichtung Folgendes umfasst:
ein Gehäuse (11), das einen Öffnungsabschnitt (13) als einen Eingang der Ware einschließt, und eine Speicherkammer (14), um die Ware im Inneren davon aufzunehmen;
eine Tür (12), die den Öffnungsabschnitt öffnet oder schließt;
eine Nachweiseinheit (20), die an einem Abschnitt im Gehäuse bereitgestellt ist, der in Kontakt mit der Tür in einem geschlossenen Zustand der Tür steht oder sich nahe bei dieser befindet, und die Öffnung oder den Verschluss der Tür nachweist;
eine Antenne (16), die im Inneren des Gehäuses bereitgestellt ist und Information vom RFID-Etikett der Ware abliest, die in der Speicherkammer im geschlossenen Zustand der Tür aufgenommen ist; und
einen Abschirmabschnitt (25, 54, 64), der eine Radiowelle abschirmt, die von der Innenseite an die Außenseite des Gehäuses dringt, an einem Abschnitt, an dem die Nachweiseinheit bereitgestellt ist;
wobei der Abschirmabschnitt ein Strukturkörper ist, der aus einem Radiowellen-reflektierenden Material oder einem Radiowellen-absorbierenden Material gebildet ist,
**dadurch gekennzeichnet, dass**
ein erstes Loch (23, 53) zum Nachweis der Öffnung oder des Verschlusses der Tür unter Verwendung der Nachweiseinheit in einem Abschnitt des Gehäuses bereitgestellt ist, der der Nachweiseinheit gegenüber liegt, und
der Abschirmabschnitt derart angeordnet ist, dass er die Nachweiseinheit und das erste Loch abdeckt, um eine Radiowelle abzuschirmen, die von der Innenseite des Gehäuses an die Außenseite dringt.

2. Vorrichtung nach Anspruch 1, wobei der Strukturkörper in einer Schachtelform gebildet ist.

3. Vorrichtung nach Anspruch 1, wobei der Strukturkörper in einer Gewölbeform gebildet ist.

4. Vorrichtung nach einem der Ansprüche 1 bis 3, wobei die Nachweiseinheit einen mechanischen Schalter (21) und einen Projektionsabschnitt (24) umfasst,
wobei der Schalter innerhalb des Strukturkörpers bereitgestellt und mit der Antenne (16) unter Verwendung eines Kabelbaums (22) verbunden ist, und
der Projektionsabschnitt (24) auf der Gehäuseseite einer Wandfläche der Tür (12) derart gebildet ist, dass er dem Schalter gegenüber liegt und durch das erste Loch den Schalter in einen geschlossenen Zustand der Tür schiebt.

5. Vorrichtung nach einem der Ansprüche 1 bis 3, wobei die Nachweiseinheit ein optischer Sensor ist, der innerhalb des Strukturkörpers bereitgestellt und mit der Antenne (16) unter Verwendung eines Kabelbaums (55) verbunden ist, wobei der Sensor konfiguriert ist, um einen Öffnungs-/Verschlusszustand der Tür (12) basierend auf einer Schaltung zwischen Helligkeit und Dunkelheit nachzuweisen, die mit einer Bewegung der Tür (12) assoziiert ist.

6. Vorrichtung nach einem der Ansprüche 1 bis 5, wobei
ein zweites Loch (26, 55), durch das ein Kabelbaum (22, 52), der mit der Nachweiseinheit verbunden ist, verläuft, im Abschirmabschnitt bereitgestellt ist, und
wobei sowohl das erste als auch das zweite Loch als ein langes Loch gebildet ist und lange Seiten des langen Lochs derart angeordnet sind, dass sie orthogonal zueinander sind, wenn sie von einer Vorderseite des ersten Lochs gesehen werden.

7. Vorrichtung nach einem der Ansprüche 1 bis 6, wobei
ein zweites Loch (26, 55), durch das ein Kabelbaum (22, 52), der mit der Nachweiseinheit verbunden ist, verläuft, im Abschirmabschnitt bereitgestellt ist, und
wobei ein leitendes Material in einem Intervall zwischen dem Kabelbaum und dem zweiten Loch gefüllt ist.

8. Vorrichtung nach Anspruch 1, wobei
die Nachweiseinheit ein magnetischer Sensor ist, der ein magnetisches Feld eines Magneten nachweist, das an der Tür bereitgestellt ist, und
wobei der Anschirmabschnitt aus einem Radiowellen-reflrktierenden Material oder einem Radiowellen-absorbierenden Material gebildet ist, und eine Wandfläche des Gehäuses ist, das dem magnetischen Sensor gegenüber liegt.

## Revendications

1. Appareil de lecture (1) pour lire des informations provenant d'une étiquette RFID (T1) qui est fixée à un produit (D1), l'appareil comprenant :
un boîtier (11) qui comprend une partie d'ouverture (13) en tant qu'entrée du produit, et une chambre de stockage (14) pour recevoir le produit dans son intérieur ;
une porte (12) qui ouvre ou ferme la partie d'ouverture ;
une unité de détection (20) qui est prévue au niveau d'une partie dans le boîtier qui est en contact avec ou est proche de la porte dans un état fermé de la porte, et détecte l'ouverture ou la fermeture de la porte ;
une antenne (16) qui est prévue à l'intérieur du boîtier, et lit les informations provenant de l'étiquette RFID du produit qui est reçu dans la chambre de stockage à l'état fermé de la porte ; et
une partie de protection (25, 54, 64) qui protège une onde radioélectrique qui fuit de l'intérieur à l'extérieur du boîtier au niveau d'une partie au niveau de laquelle l'unité de détection est prévue ;
dans lequel la partie de protection est un corps de structure qui est formé avec un matériau de réflexion d'onde radioélectrique ou un matériau d'absorption d'onde radioélectrique,
**caractérisé en ce que** :
un premier trou (23, 53) pour détecter l'ouverture ou la fermeture de la porte en utilisant l'unité de détection est prévu au niveau d'une partie du boîtier qui fait face à l'unité de détection, et
la partie de protection est agencée pour recouvrir l'unité de détection et le premier trou pour protéger une onde radioélectrique qui fuit de l'extérieur à l'intérieur du boîtier.

2. Appareil selon la revendication 1, dans lequel le corps de structure est formé en forme de boîte.

3. Appareil selon la revendication 1, le corps de structure est formé en forme de dôme.

4. Appareil selon l'une quelconque des revendications 1 à 3, dans lequel l'unité de détection comprend un commutateur mécanique (21) et une partie de saillie (24),
dans lequel :
le commutateur est prévu à l'intérieur du corps de structure et est raccordé à l'antenne (16) en utilisant un faisceau électrique (22), et
la partie de saillie (24) est formée du côté du boîtier d'une surface de paroi de la porte (12) afin de faire face au commutateur et pousser à travers le premier trou, le commutateur dans un état fermé de la porte.

5. Appareil selon l'une quelconque des revendications 1 à 3, dans lequel l'unité de détection est un capteur optique prévu à l'intérieur du corps de structure et est raccordée à l'antenne (16) en utilisant un faisceau électrique (55), dans lequel le capteur est configuré pour détecter un état d'ouverture - fermeture de la porte (12) basé sur la commutation entre la clarté et l'obscurité qui est associée au mouvement de la porte (12).

6. Appareil selon l'une quelconque des revendications 1 à 5,
dans lequel un second trou (26, 55) à travers lequel un faisceau électrique (22, 52) qui est raccordé à l'unité de détection passe, est prévu dans la partie de protection, et
dans lequel à la fois le premier et le second trou sont formés comme un trou long, et les côtés longs du trou long sont disposés afin d'être orthogonaux entre eux lorsqu'ils sont observés depuis une face avant du premier trou.

7. Appareil selon l'une quelconque des revendications 1 à 6,
dans lequel un second trou (26, 55) à travers lequel un faisceau électrique (22, 52) qui est raccordé à l'unité de détection passe, est prévu dans la partie de protection, et
dans lequel un matériau conducteur est versé dans un intervalle entre le faisceau électrique et le second trou.

8. Appareil selon la revendication 1, dans lequel l'unité de détection est un capteur magnétique qui détecte un champ magnétique d'un aimant prévu au niveau de la porte et dans lequel la partie de protection est formée avec un matériau de réflexion d'onde radioélectrique ou un matériau d'absorption d'onde radioélectrique, et est une surface de paroi du boîtier qui fait face au capteur magnétique.
